(19) **Europäisches Patentamt**

**European Patent Office**

**Office européen des brevets**

(11) **EP 1 084 078 B1**

(12) **EUROPÄISCHE PATENTSCHRIFT**

(45) Veröffentlichungstag und Bekanntmachung des Hinweises auf die Patenterteilung:
**28.08.2002 Patentblatt 2002/35**

(51) Int Cl.7: **C02F 1/00**

(21) Anmeldenummer: **99929042.2**

(86) Internationale Anmeldenummer:
**PCT/DE99/01254**

(22) Anmeldetag: **28.04.1999**

(87) Internationale Veröffentlichungsnummer:
**WO 99/057063 (11.11.1999 Gazette 1999/45)**

(54) **VERFAHREN ZUM ENTFERNEN VON NITRATIONEN AUS EINER LÖSUNG**

METHOD FOR REMOVING NITRATE IONS FROM A SOLUTION

PROCEDE D'ELIMINATION D'IONS NITRATE CONTENUS DANS UNE SOLUTION

(84) Benannte Vertragsstaaten:
**BE CH DE ES FI FR GB IT LI NL SE**

(30) Priorität: **30.04.1998 DE 19819518**

(43) Veröffentlichungstag der Anmeldung:
**21.03.2001 Patentblatt 2001/12**

(73) Patentinhaber: **Framatome ANP GmbH
91050 Erlangen (DE)**

(72) Erfinder:
• **BERTHOLDT, Horst-Otto
D-91301 Forchheim (DE)**
• **GASSEN, Rainer
D-90765 Fürth (DE)**

(74) Vertreter: **Mörtel & Höfner
Patentanwälte
Blumenstrasse 1
90402 Nürnberg (DE)**

(56) Entgegenhaltungen:
**EP-A- 0 470 518          EP-A- 0 781 728
DE-A- 4 124 843          DE-A- 4 212 604
US-A- 5 500 192**

**Beschreibung**

Die Erfindung betrifft ein Verfahren zum Entfernen von Nitrationen aus einer gebrauchten Dekontaminationslösung der Salpetersäure zugegeben wurde.

Nitrationen sind in Abwässern nicht erwünscht. Sie sind jedoch in unterschiedlichen Lösungen vorhanden, die als Abwasser zu beseitigen sind. Beispielsweise enthält gebrauchte Dekontaminationslösung, die in einem Kernkraftwerk zur Dekontamination von Oberflächen verwendet worden ist, Nitrationen. Das gleiche gilt für eine Lösung, die für andere Verfahren zum Abbau der Radioaktivität eingesetzt worden ist. Bei solchen Verfahren wird beispielsweise Salpetersäure verwendet, die in der Lösung Nitrationen freisetzt.

Es ist bereits vorgeschlagen worden, zum Entfernen von Nitrationen aus einer Lösung Anionenaustauscherharze einzusetzen. Ein solches Verfahren ist sehr kostenintensiv und es verbleiben beladene Ionenaustauscherharze, die entsorgt werden müssen. In einigen Bereichen der Technik, z.B. bei der Kerntechnik, ist das Beladen von Ionenaustauscherharzen mit Nitrationen unerwünscht, da eine Reaktion zwischen im Ionenaustauscherharz bereits vorhandenen Aminen und den Nitrationen zu befürchten ist.

Der Erfindung liegt die Aufgabe zugrunde, ein Verfahren zum Entfernen von Nitrationen aus einer Lösung anzugeben, das ohne Ionenaustauscher auskommt und selbst geringste Konzentrationen aus Nitrat vollständig entfernt.

Die Aufgabe wird gemäß der Erfindung dadurch gelöst, daß festgestellt wird, ob die Lösung eine kurzkettige, organische Verbindung enthalt, daß, falls eine solche Verbindung vorhanden ist, die Lösung mit UV-Licht bestrahlt wird, und falls eine solche Verbindung nicht vorhanden ist, eine kurzkettige, organische Verbindung in die Lösung eingebracht wird, und dann die Lösung mit UV-Licht bestrahlt wird.

Die organische Verbindung, die zusammen mit dem UV-Licht eine Reduktion der Nitrationen bewirkt, kann in der Lösung bereits vorhanden sein. Dekontaminationslösungen oder andere Lösungen, die beim Abbau der Radioaktivität von Metallteilen zurückbleiben, enthalten nämlich häufig geeignete, kurzkettige, organische Verbindungen. Es muß also, wenn festgestellt worden ist, daß eine geeignete Verbindung bereits vorhanden ist, eine solche Verbindung vorteilhafterweise nicht bereitgestellt werden.

Nur falls festgestellt worden ist, daß die Lösung keine geeignete organische Verbindung enthält, wird eine kurzkettige, organische Verbindung in die Lösung eingebracht.

Ob eine gewünschte Verbindung in der Lösung vorhanden ist oder nicht, kann durch eine Messung, eine Analyse der Lösung oder auch dadurch festgestellt werden, daß rekapituliert wird, welche Stoffe früher die Lösung gebildet haben.

Mit dem Verfahren nach der Erfindung werden die Nitrationen chemisch zu unschädlichen Stoffen reduziert. Es entstehen beispielsweise Stickstoff ($N_2$), Lachgas ($N_2O$), Kohlenstoffdioxid ($CO_2$) und Wasser ($H_2O$).

Mit dem Verfahren nach der Erfindung wird der Vorteil erzielt, daß kein Ionenaustauscher benötigt wird, um Nitrationen aus einer Lösung zu entfernen.

Eine geeignete, kurzkettige, organische Verbindung ist beispielsweise eine Säure, z.B. eine kurzkettige Carbonsäure oder eine kurzkettige Dicarbonsäure. Beispielsweise sind als eine solche Saure Ascorbinsäure, Tartronsäure, Oxalsäure, Glykolsäure, Glyoxysäure und/oder Ameisensäure geeignet. Besonders geeignet ist Ameisensäure.

Die Lösung, die von Nitrationen zu befreien ist, ist eine gebrauchte Lösung sein, die Nitrationen enthält, weil ihr z.B. im Zuge ihrer Bestimmung Salpetersäure zugegeben wurde. Salpetersäure kann zum Abbau der Radioaktivität eines Metallteiles eingesetzt werden und ist dann in der verbleibenden zu entsorgenden Lösung vorhanden.

Bei Bestrahlung mit UV-Licht erhält man z.B. aus Salpetersäure und Ameisensäure als Endprodukte Lachgas, Kohlenstoffdioxid und Wasser. Diese Stoffe können abgegeben werden. Die Summenformel lautet:

$$2\ HNO_3 + 4\ H_2CO_2 \Rightarrow N_2O + 4\ CO_2 + 5\ H_2O.$$

Diese Reaktion läuft bei Bestrahlung mit UV-Licht ab.

Beispielsweise wird die Lösung im Kreislauf an einer UV-Quelle vorbeigeführt.

Die Lösung kann auch in einem Reaktionsgefäß mit einer UV-Quelle, z.B. mit einer UV-Tauchlampe, behandelt werden.

Die UV-Quelle kann ein sogenannter UV-Brenner sein. Damit ist gewährleistet, daß stets genügend Energie durch UV-Licht eingestrahlt wird.

Die Lösung wird während der Reaktion beispielsweise auf einer Temperatur zwischen Raumtemperatur und 100 °C gehalten. Beispielsweise wird eine Temperatur zwischen 60 °C and 100 °C als Behandlungstemperatur gewählt. Bei einer solchen Temperatur läuft die Reduktion der Nitrationen besonders gut ab.

Mit dem Verfahren nach der Erfindung wird insbesondere der Vorteil erzielt, daß Nitrationen in einfacher Weise aus einer Lösung weitgehend vollstandig entfernt werden können, ohne daß weiter zu entsorgende Sekundärabfälle, wie z.B. Ionenaustauscherharze, anfallen. Das Verfahren ist besonders gut einsetzbar, um gebrauchte Dekontaminationslösungen, die zum Abbau der Radioaktivität an Bestandteilen von Kernkraftwerken benötigt wurden, zu entsorgen.

**Patentansprüche**

**1.** Verfahren zum Entfernen von Nitrationen aus einer gebrauchten Dekontaminationslösung, der Salpetersäure zugegeben wurde,
**dadurch gekennzeichnet, daß** festgestellt wird, ob die Lösung eine kurzkettige, organische Verbindung enthält, daß, falls eine solche Verbindung vorhanden ist, die Lösung mit UV-Licht bestrahlt wird, und falls eine solche Verbindung nicht vorhanden ist, eine kurzkettige, organische Verbindung in die Lösung eingebracht wird, und dann die Lösung mit UV-Licht bestrahlt wird.

2. Verfahren nach Anspruch 1,
   **dadurch gekennzeichnet, daß** die kurzkettige, organische Verbindung eine Säure ist.

3. Verfahren nach einem der Ansprüche 1 oder 2,
   **dadurch gekennzeichnet, daß** die kurzkettige, organische Verbindung eine kurzkettige Carbonsäure oder Dicarbonsäure ist.

4. Verfahren nach einem der Ansprüche 1 bis 3,
   **dadurch gekennzeichnet, daß** die kurzkettige, organische Verbindung Ameisensäure ist.

5. Verfahren nach einem der Ansprüche 1 bis 4,
   **dadurch gekennzeichnet, daß** die Lösung im Kreislauf an einer UV-Quelle vorbeigeführt und/ oder in einem Reaktionsgefäß mit einer UV-Quelle behandelt wird.

6. Verfahren nach einem der Ansprüche 1 bis 5,
   **dadurch gekennzeichnet , daß** die Lösung während der Reaktion auf einer Temperatur zwischen Raumtemperatur und 100 °C gehalten wird.

7. Verfahren nach Anspruch 6,
   **dadurch gekennzeichnet, daß** die Lösung während der Reaktion auf einer Temperatur zwischen 60 °C und 100 °C gehalten wird.

## Claims

1. Method for removing nitrate ions from a spent decontamination solution to which nitric acid has been added,
   **characterized in that** it is established whether the solution comprises a short-chain organic compound, **in that**, if such a compound is present, the solution is irradiated with UV light, and if such a compound is not present, a short-chain organic compound is introduced into the solution, and then the solution is irradiated with UV light.

2. Method according to Claim 1,
   **characterized in that** the short-chain organic compound is an acid.

3. Method according to one of Claims 1 or 2,
   **characterized in that** the short-chain organic compound is a short-chain carboxylic acid or dicarboxylic acid.

4. Method according to one of Claims 1 to 3,
   **characterized in that** the short-chain organic compound is formic acid.

5. Method according to one of Claims 1 to 4,
   **characterized in that** the solution is circulated past a UV source and/or is treated with a UV source in a reaction vessel.

6. Method according to one of Claims 1 to 5,
   **characterized in that** the solution during the reaction is maintained at a temperature between room temperature and 100°C.

7. Method according to Claim 6,
   **characterized in that** the solution during the reaction is maintained at a temperature between 60°C and 100°C.

## Revendications

1. Procédé d'élimination d'ions nitrate d'une solution de décontamination usée, à laquelle il a été ajouté de l'acide nitrique, **caractérisé en ce que** l'on détermine si la solution contient un composé organique à chaîne courte, **en ce que**, dans le cas où un composé de ce genre est présent, on soumet la solution à une exposition à de lumière ultraviolette et, dans le cas où un composé de ce genre n'est pas présent, on introduit dans la solution un composé organique à chaîne courte, puis on soumet la solution à une exposition à de la lumière ultraviolette.

2. Procédé suivant la revendication 1, **caractérisé en ce que** le composé organique à chaîne courte est un acide.

3. Procédé suivant l'une des revendications 1 ou 2, **caractérisé en ce que** le composé organique à chaîne courte est un acide carboxylique à chaîne courte ou un acide dicarboxylique à chaîne courte.

4. Procédé suivant l'une des revendications 1 à 2, **caractérisé en ce que** le composé organique à chaîne courte est l'acide formique.

5. Procédé suivant l'une des revendications 1 à 4, **caractérisé en ce qu'**on fait passer la solution en circuit devant une source de rayons ultraviolets et/ou on la traite dans un récipient de réaction par une source de rayons ultraviolets.

**6.** Procédé suivant l'une des revendications 1 à 5, **caractérisé en ce que** l'on maintient la solution pendant la réaction à une température comprise entre la température ambiante et 100°C.

**7.** Procédé suivant la revendication 6, **caractérisé en ce que** l'on maintient la solution pendant la réaction à une température comprise entre 60°C et 100°C.